# EUROPÄISCHE PATENTSCHRIFT

(11) **EP 2 267 037 B1**
(45) Veröffentlichungstag und Bekanntmachung des Hinweises auf die Patenterteilung: **14.11.2012**
(21) Anmeldenummer: 09163917.9
(22) Anmeldetag: 26.06.2009
(51) Int. Cl.: C08C 19/02, C08C 19/08, C08L 15/00

(54) **Verwendung von ganz oder teilweise hydrierten Nitrilkautschuken**
Use of wholly or partially hydrated nitrile rubbers
Utilisation de caoutchouc de nitrile totalement ou partiellement hydrogéné

(43) Veröffentlichungstag der Anmeldung: 29.12.2010
(73) Patentinhaber: LANXESS Deutschland GmbH, 51369 Leverkusen (DE)
(72) Erfinder: Soddemann, Matthias, Dr., 51503 Rösrath (DE); Haider, Joachim, Dr., 80637 München (DE); Taschner, Frank, 40789 Monheim (DE)

(56) Entgegenhaltungen:
- ZEON CORPORATION: "Zeon's Rubber Guide 2008"[Online] 2008, XP002550235 Gefunden im Internet: URL:http://www.zeon.co.jp/business_e/enter prise/rubber/rubberlist.pdf> [gefunden am 2009-10-08]
- VICTOR NASREDDINE, JOHN DATO, MARTIN MEZGER, DICK SCHAEFER AND JUERGEN WASSEN: "Low Mooney viscosity HNBR polymers with high acrylonitrile content" RUBBER WORLD, Bd. 237, Nr. 5, Februar 2008 (2008-02), Seiten 34-38, XP002550236 ISSN: 0035-9572

## Beschreibung

Die Erfindung betrifft die Verwendung von ganz oder teilweise hydrierten Nitrilkautschuken für Formteile, die in Kontakt mit flüssigen Kraftstoffen stehen.

Unter Nitrilkautschuk, abgekürzt auch als "NBR" bezeichnet, werden Kautschuke verstanden, bei denen es sich um Co- oder Terpolymere aus mindestens einem α,β-ungesättigten Nitril, mindestens einem konjugierten Dien und gegebenenfalls einem oder mehreren weiteren copolymerisierbaren Monomeren handelt.

Hydrierter Nitrilkautschuk, abgekürzt auch als "HNBR" bezeichnet, wird durch teilweise oder vollständige Hydrierung von Nitrilkautschuk hergestellt. Entsprechend sind in HNBR die C=C Doppelbindungen der einpolymerisierten Dieneinheiten ganz oder teilweise hydriert. Der Hydriergrad der einpolymerisierten Dieneinheiten liegt üblicherweise in einem Bereich von 50 bis 100%. Hydrierter Nitrilkautschuk ist ein Spezialkautschuk, der über eine sehr gute Hitzebeständigkeit, eine hervorragende Beständigkeit gegen Ozon und Chemikalien sowie eine gute Ölbeständigkeit verfügt.

Die vorgenannten physikalischen und chemischen Eigenschaften des HNBR gehen einher mit sehr guten mechanischen Eigenschaften, insbesondere einer hohen Abriebfestigkeit. Aus diesem Grund hat HNBR breite Verwendung in den verschiedensten Anwendungsgebieten gefunden. HNBR wird beispielsweise eingesetzt für Dichtungen, Schläuche, Riemen und Dämpfungselemente im Automobilsektor, ferner für Statoren, Bohrlochdichtungen und Ventildichtungen im Bereich der Ölförderung sowie auch für zahlreiche Teile der Luftfahrtindustrie, der Elektroindustrie, des Maschinen- und des Schiffsbaus.

Beim Einsatz für Anwendungen, wo die entsprechenden Formteile in Kontakt mit Ölen oder flüssigen Kraftstoffen kommen, ist es wichtig, dass die Formteile unter dem Einfluss der genannten Medium nur wenig quellen, da hierdurch ansonsten die Volumenstabilität des entsprechenden Bauteils und die Dichtigkeit im Falle von Dichtungen aller Art in Mitleidenschaft bis hin zum Totalausfall gezogen wird.

Der Acrylnitrilgehalt kommerziell gängiger ganz- oder teilweise hydrierter Nitrilkautschuke liegt bei Standardtypen üblicherweise in einem Bereich von 17 bis 43 Gew.%. Erst kürzlich wurden erstmals ganz hydrierte Nitrilkautschuke mit einem sehr hohen Gehalt an Acrylnitril von größer als 43 Gew.% zugänglich und sind beispielsweise unter dem Markennamen Therban® als Therban^{®} A 5008 VP und Therban^{®} AT A 5005 VP kommerziell von der Lanxess Deutschland GmbH verfügbar. In diesem Zuge wurde bekannt, dass die vorgenannten ganz hydrierten, aber auch teilweise hydrierte Nitrilkautschuke mit sehr hohen Gehalt an Acrylnitril von größer als 43 Gew.% geeignet sind, zu Formteilen verarbeitet und vulkanisiert zu werden, die beim Kontakt mit Kraftstoffen eine geringere Quellung aufweisen als ganz- oder teilweise hydrierte Nitrilkautschuke mit einem Gehalt an Acrylnitril von maximal 43 Gew.%.

Unabhängig vom Quellungsphänomen ist es für Formteile auf Basis von HNBR wesentlich, dass bei einem Kraftstoffkontakt nur eine geringe Permeation von Kraftstoffen in die entsprechenden Formteile stattfindet, da hierdurch später vor allem ein Ausgasen von gesundheitlich bedenklichen Kraftstoffen in die Umwelt und vor allem in die Fahrgastzelle eines Kraftfahrzeugs minimiert bzw. ganz unterbunden wird. Darüberhinaus gilt es auch zu vermeiden, dass durch hineinpermeirten Kraftstoff Weichmacher und/oder andere Additive aus dem Formteil herausgelöst werden, wodurch insbesondere die mechanischen Eigenschaften beeinträchtigt werden können.

In "Zeon's Rubber Guide 2008", [Online] 2008, XP002550235 wird auf Seite 12 Zetpol® HNBR genannt. Offenbart wird in den ersten beiden Tabellen auf Seite 12 HNBR mit hohen Nitrilgehalten (1. Tabelle Nitrilgehalt 49,2 %, 2. Tabelle Nitrilgehalt 44,2 %). Charakteristisch für dieses in den Tabellen genannte HNBR ist eine gute Beständigkeit gegenüber Kraftstoffen, weswegen es zur Herstellung von Schläuchen, Membranen und Dichtungen verwendet werden kann.

In Rubber World, Bd. 237, Nr. 5, Februar 2008, S. 34-38 werden verschiedenen HNBR-Typen mit einem Acrylnitrilgehalt von 43 % bzw. einem Acrylnitrilgehalt von 49 % verglichen. Auf Seite 4, letzter Absatz (Punkt 4) wird erwähnt, dass HNBR-Polymere mit Acrylnitrilgehalten von mehr als 43 % dann nützlich sind, wenn eine höchstmögliche Beständigkeit gegenüber Kraftstoffen erforderlich ist, wie z.B. in Automobilanwendungen, bei der Ölbohrung und in sogenannten "flex fuel"-Anwendungen.

Somit ist aus den beiden vorgenannten Literaturstellen bekannt, dass sich HNBR mit hohen Acrylnitrilgehalten zur Herstellung von Formteilen eignet, die sich durch eine gute Beständigkeit gegenüber Kraftstoffen auszeichnen. Keines der beiden Dokumenten enthält jedoch Hinweise darauf, ob ganz oder teilweise hydrierte Nitrilkautschuke mit einem Nitrilgehalt von > 43 Gew.-% zu einer Verringerung der Permeation von flüssigen Kraftstoffen in Formteile eingesetzt werden können.

Unerwarteterweise kann eine extrem geringe Permeation flüssiger Kraftstoffen in Formteile realisiert werden bei Verwendung von ganz oder teilweise hydrierten Nitrilkautschuken mit einem Gehalt des α,β-ungesättigten Nitrils größer 43 Gew.%, bevorzugt größer als 44,5 Gew.%.

Gegenstand der Erfindung ist somit die Verwendung von ganz oder teilweise hydrierten Nitrilkautschuken zur Verringerung der Permeation flüssiger Kraftstoffe in Formteile, dadurch gekennzeichnet, dass der Gehalt des einpolymerisierten α,β-ungesättigten Nitrilmonomeren größer als 43 Gew.%, bevorzugt größer als 44,5 Gew.%, bezogen auf den ganz oder teilweise hydrierten Nitrilkautschuk ist.

Überraschenderweise beobachtet man bei Einsatz dieser ganz oder teilweise hydrierten Nitrilkautschuke mit einem Gehalt des einpolymerisierten α,β-ungesättigten Nitrilmonomeren von größer als 43 Gew.% eine sehr geringe Permeation flüssiger Kraftstoffe in entsprechende Formteile. Diese Permeation ist insbesondere substanziell reduziert gegenüber der Permeation, die bei ganz oder teilweise hydrierten Nitrilkautschuken mit einem Gehalt des einpolymerisierten α,β-ungesättigten Nitrilmonomeren von maximal 43 Gew.% beobachtet wird. Die beobachtete Reduktion ist auch unerwartet stärker ausgeprägt als bei dem von der Permeation losgelösten Effekt der Quellung. Aufgrund der sehr geringen Permeation resultiert, dass entsprechende Formteile dieser ganz oder teilweise hydrierten Nitrilkautschuke mit einem Gehalt des einpolymerisierten α,β-ungesättigten Nitrilmonomeren von größer als 43 Gew.% auch unter härteren Bedingungen wie höherer Temperatur über einen längeren Zeitraum sehr gute mechanische und physikalische Eigenschaften aufweisen und ferner im Dauergebrauch nicht zu einem Ausgasen der Kraftstoffe in die Umwelt sowie KFZ-Fahrgastzelle führen.

### Nitrilkautschuke:

Als ganz oder teilweise hydrierte Nitrilkautschuke (nachfolgend auch als "HNBR" abgekürzt) können erfindungsgemäß Co- oder Terpolymere eingesetzt werden, welche auf Wiederholungseinheiten mindestens eines konjugierten Diens, mindestens eines α,β-ungesättigten Nitrils und gegebenenfalls einer oder mehrerer weiterer copolymerisierbarer Monomere basieren, wobei die C=C Doppelbindungen, die aus den Wiederholungseinheiten des konjugierten Diens sowie gegebenfalls der weiteren copolymerisierbaren Monomere stammen, ganz oder teilweise hydriert sind und ferner der Gehalt des einpolymerisierten α,β-ungesättigten Nitrilmonomeren größer 43 Gew.% ist.

Das HNBR wird somit durch Hydrierung des zugrundliegenden NBRs erhalten. Die Herstellung von NBR durch Polymerisation der vorgenannten Monomere ist dem Fachmann hinlänglich bekannt und in der Literatur umfangreich beschrieben. Auch die sich daran anschließende Hydrierung ist dem Fachmann geläufig und in der Literatur umfangreich beschrieben (z.B. Houben-Weyl, Methoden der Organischen Chemie Bd.14/1, Georg Thieme Verlag Stuttgart 1961) Entsprechende Hydrierverfahren sind aus DE-A-25 39 132, EP-A-0 471 250 und US-A-6,683,136 bekannt.

Das bei der NBR Herstellung eingesetzte konjugierte Dien kann von jeder Natur sein. Bevorzugt werden (C₄-C₆) konjugierte Diene eingesetzt. Besonders bevorzugt sind 1,3-Butadien, Isopren, 2,3-Dimethylbutadien, Piperylen oder Gemische daraus. Insbesondere bevorzugt sind 1,3-Butadien und Isopren oder Gemische daraus. Ganz besonders bevorzugt ist 1,3-Butadien.

Als α,β-ungesättigtes Nitril kann jedes bekannte α,β-ungesättigte Nitril eingesetzt werden, bevorzugt sind (C₃-C₅)-α,β-ungesättigte Nitrile wie Acrylnitril, Methacrylnitril, Ethacrylnitril oder Mischungen davon. Besonders bevorzugt ist Acrylnitril.

Einen besonders bevorzugten Nitrilkautschuk stellt ein Copolymer aus Acrylnitril und 1,3-Butadien dar.

Neben dem konjugierten Dien und dem α,β-ungesättigten Nitril können noch ein oder mehrere weitere dem Fachmann bekannte, copolymerisierbare Monomere eingesetzt werden.

Hierbei kann es sich beispielsweise um α,β**-ungesättigte Mono- oder Dicarbonsäuren, deren Ester,** α,β**-ungesättigte Dicarbonsäuren, deren Mono- oder -Diester oder um die entsprechenden Anhydride oder Amide** handeln.

Als α,β**-ungesättigte Monocarbonsäuren** können bevorzugt Acrylsäure und Methacrylsäure eingesetzt werden.

Einsetzbar sind auch **Ester der** α,β**-ungesättigten Monocarbonsäuren,** bevorzugt deren Alkylester und Alkoxyalkylester. Bevorzugt sind die Alkylester, insbesondere C₁-C₁₈ Alkylester der α,β-ungesättigten Monocarbonsäuren, Besonders bevorzugt sind Alkylester, insbesondere C₁-C₁₈ Alkylester der Acrylsäure oder der Methacrylsäure, insbesondere Methylacrylat, Ethylacrylat, Propylacrylat, n-Butylacrylat, tert.-Butylacrylat, 2-Ethylhexylacrylat, n-Dodecylacrylat, Methylmethacrylat, Ethylmethacrylate, Butylmethacrylat und 2-Ethylhexyl-methacrylat. Bevorzugt sind auch Alkoxyalkylester der α,β-ungesättigten Monocarbonsäuren, besonders bevorzugt Alkoxyalkylester der Acrylsäure oder der Methacrylsäure, insbesondere C₂-C₁₂-Alkoxyalkylester der Acrylsäure oder der Methacrylsäure, ganz besonders bevorzugt Methoxymethylacrylat, Methoxyethyl(meth)acrylat, Ethoxyethyl(meth)acrylat und Methoxyethyl-(meth)acrylat. Einsetzbar sind auch Mischungen von Alkylestern, wie z.B. den vorgenannten, mit Alkoxyalkylestern, z.B. in Form der vorgenannten. Einsetzbar sind auch Cyanoalkylacrylat and Cyanoalkylmethacrylate, in denen die C-Atom-Zahl der Cyanoalkylgruppe 2-12 beträgt, vorzugsweise α-Cyanoethylacrylat, β-Cyanoethylacrylat und Cyanobutylmethacrylat. Einsetzbar sind auch Hydroxyalkylacrylate and Hydroxyalkylmethacrylat, in denen die C-Atom-Zahl der Hydroxyalkylgruppen 1-12 beträgt, vorzugsweise 2-Hydroxyethylacrylat, 2-Hydroxyethyl Methacrylat und 3-Hydroxypropylacrylat; Einseztbar sind auch Fluor-substituierte Benzylgruppenhaltige Acrylate oder Methacrylate, vorzugtsweise Fluorobenzylacrylat, und Fluorobenzylmethacrylat. Einsetzbar sind auch Fluoroalkylgruppen haltige Acrylate und - Methacrylate, vorzugsweise Trifluoroethylacrylat und Tetrafluoropropylmethacrylat. Einsetzbar sind auch Aminogruppenhaltige αβ-ungesättigte Carbonsäureester wie Dimethylaminomethyl acrylat und Diethylaminoethylacrylat.

Als weitere copolymerisierbare Monomere können ferner α,β**-ungesättigte Dicarbonsäuren,** bevorzugt Maleinsäure, Fumarsäure, Itaconsäure, Citraconsäure und Mesaconsäure, eingesetzt werden.

Eingesetzt werden können ferner α,β**-ungesättigte Dicarbonsäureanhydride,** bevorzugt Maleinsäureanhydrid, Fumarsäureanhydrid, Itaconsäureanhydrid, Citraconsäureanhydrid und Mesaconsäureanhydrid.

Eingesetzt werden können ferner **Mono- oder Diester von** α,β-**ungesättigten Dicarbonsäuren.**

Bei diesen α,β-ungesättigten Dicarbonsäuremono- oder diestern kann es sich um Alkyl-, bevorzugt C₁-C₁₀-Alkyl, insbesondere Ethyl-, n-Propyl-, iso-Propyl, n-Butyl-, tert.-Butyl, n-Pentyl- oder n-Hexyl-,Cycloalkyl-, bevorzugt C₅-C₁₂-Cylcoalkyl-, besonders bevorzugt C₆-C₁₂-Cycloalkyl Alkylcycloalkyl-, C₆-C₁₂-Alkylcycloalkyl-, besonders bevorzugt C₇-C₁₀-Alkylcycloalkyl, Aryl-, bevorzugt C₆-C₁₄-Aryl-Mono- oder -Diester, wobei es sich im Fall der Diester jeweils auch um gemischte Ester handeln kann.

Beispiele von α,β**-ungesättigten Dicarbonsäuremonoestern umfassen**
- Maleinsäuremonoalkylester, bevorzugt Monomethylmaleat, Monoethylmaleat, Monopropyl maleat und Mono-n-butylmaleat;
- Maleinsäuremonocycloalkylester, bevorzugt Monocyclopentylmaleat, Monocyclohexyl maleat und Monocycloheptylmaleat;
- Maleinsäuremonoalkylcycloalkylester, bevorzugt Monomethylcyclopentylmaleat und Monoethylcyclohexylmaleat;
- Maleinsäuremonoarylester, bevorzugt Monophenylmaleat;
- Maleinsäuremonobenzylester, bevorzugt Monobenzylmaleat;
- Fumarsäuremonoalkylester, bevorzugt Monomethylfumarat, Monoethylfumarat, Monopropyl fumarat und Mono-n-butyl fumarat;
- Fumarsäuremonocycloalkylester, bevorzugt Monocyclopentylfumarat, Monocyclohexyl fumarat und Monocycloheptylfumarat;
- Fumarsäuremonoalkylcycloalkylester, bevorzugt Monomethylcyclopentylfumarat und Monoethylcyclohexylfumarat;
- Fumarsäuremonoarylester, bevorzugt Monophenylfumarat;
- Fumarsäuremonobenzylester, bevorzugt Monobenzylfumarat;
- Citraconsäuremonoalkylester, bevorzugt Monomethylcitraconat, Monoethylcitraconat, Monopropylcitraconat und Mono-n-butyl citraconat;
- Citraconsäuremonocycloalkylester, bevorzugt Monocyclopentylcitraconat, Monocyclohexyl citraconat und Monocycloheptylcitraconat;
- Citraconsäuremonoalkylcycloalkylester, bevorzugt Monomethylcyclopentylcitraconat und Monoethylcyclohexylcitraconat;
- Citraconsäuremonoarylester, bevorzugt Monophenylcitraconat;
- Citraconsäuremonobenzylester, bevorzgut Monobenzylcitraconat;
- Itaconsäuremonoalkylester, bevorzugt Monomethylitaconat, Monoethylitaconat, Monopropyl itaconat und Mono-n-butyl itaconat;
- Itaconsäuremonocycloalkylester, bevorzugt Monocyclopentylitaconat, Monocyclohexyl itaconat und Monocycloheptylitaconat;
- Itaconsäuremonoalkylcycloalkylester, bevorzugt Monomethylcyclopentylitaconat und Monoethylcyclohexylitaconat;
- Itaconsäuremonoarylester, bevorzugt Monophenylitaconat;
- Itaconsäuremonobenzylester, bevorzugt Monobenzylitaconat.
- Mesaconsäuremonoalkylester, bevorzugt Mesaconsäuremonoethylester;

Als α,β**-ungesättigte Dicarbonsäurediester** können die analogen Diester basierend auf den zuvor genannten Monoestergruppen eingesetzt werden, wobei es sich bei den Estergruppen auch um chemisch verschiedene handeln kann.

Als weitere Termonomere können ferner **aromatische Vinylmonomere** eingesetzt werden, bevorzugt Styrol, α-Methylstyrol und Vinylpyridin, **fluorhaltige Vinylmonomere**, bevorzugt Fluorethylvinylether, Fluorpropyl vinylether, o-Fluormethylstyrol, Vinylpentafluorbenzoat, Difluoroethylen und Tetrafluoroethylen, oder auch **copolymerisierbare Antiageing Monomere,** bevorzugt N-(4-anilinophenyl) acrylamid, N-(4-anilinophenyl) methacrylamid, N-(4-anilinphenyl) cinnamide, N-(4-anilinophenyl) crotonamid, N-phenyl-4-(3-vinylbenzyloxy) anilin und N-phenyl-4-(4-vinylbenzyloxy) anilin.

Die Anteile an konjugiertem Dien und α,β-ungesättigtem Nitril in den erfindungsgemäß einzusetzenden HNBR-Polymeren können in weiten Bereichen schwanken. Entscheidend ist, dass der Anteil des einpolymerisierten α,β-ungesättigten Nitrils oder der Summe der α,β-ungesättigten Nitrile größer als 43 Gew.-% ist, bevorzugt größer 44,5 Gew.-%, weiter bevorzugt größer als 44,5 Gew.% und bis 60 Gew.%, besonders bevorzugt größer als 44,5 Gew.% und bis 52 Gew.%, ganz besonders bevorzugt 45 Gew.% bis 51,5 Gew.% und insbesondere 45 Gew.% bis 50,5 Gew.%, bezogen auf das Gesamtpolymer. Der Anteil der auf das konjugierte Dien oder die Summe der konjugierten Diene zurückgehenden Wiederholungseinheiten beträgt somit bis zu 57 Gew.%, bevorzugt bis zu 55,5 Gew.%, liegt weiter bevorzugt im Bereich von 40 Gew.% bis zu 55,5 Gew.%, besonders bevorzugt 48 Gew.% bis zu 55,5 Gew.%, ganz besonders bevorzugt 48,5 Gew.% bis zu 55 Gew.% und insbesondere 49,5 Gew.% bis zu 55 Gew.%, bezogen auf das Gesamtpolymer. Die Anteile der einpolymerisierten Monomere summieren sich jeweils zu 100 Gew.-% auf. Die zusätzlichen copolymerisierbaren Monomere können in Mengen von 0 bis 40 Gew.%, bevorzugt 0,1 bis 40 Gew.-%, besonders bevorzugt 1 bis 30 Gew.-%, bezogen auf das Gesamtpolymer, vorliegen. In diesem Fall wird der entsprechende Anteil der Wiederholungseinheiten, die auf das oder die konjugierten Diene zurückgehen, durch die Anteile der zusätzlichen Monomere ersetzt, wobei sich die Anteile aller Monomere weiterhin jeweils zu 100 Gew.-% aufsummieren.

Neben den bekannten Polymerisations- sowie Hydrierverfahren ist es dem Fachmann auch geläufig, dass die Nitrilkautschuke nach ihrer Polymerisation vor der Hydrierung einer Metathese-Reaktion unterzogen werden können (siehe z.B. WO-A-02/100941 sowie WO-A-02/100905), um das Molekulargewicht der Nitrilkautschuke zu verrringern.

Ganz oder teilweise hydrierte Nitrilkautschuke, die im erfindungsgemäßen Sinn verwendet werden können, sind ferner käuflich erhältlich, z.B. Therban® A 5008 VP und Therban® AT A 5005 VP der Lanxess Deutschland GmbH.

Die ganz oder teilweise hydrierte Nitrilkautschuke, die im erfindungsgemäßen Sinn verwendet werden können, besitzen üblicherweise eine Mooney-Viskosität (ML 1+4 @ 100°C) im Bereich von größer Null bis 200 ME, bevorzugt in einem Bereich mit einem unteren Grenzwert größer Null aber <1 bis zu einem oberen Grenzwert von 200 ME (ME = Mooney Einheiten). Die Bestimmung der Mooney-Viskosität erfolgt dabei gemäß ASTM Norm D 1646. Dies entspricht ungefähr einem Gewichtsmittel des Molekulargewicht M_{w} im Bereich von 5.000 bis 1.000.000 g/mol. Besonders bevorzugt liegt die Mooney-Viskosität (ML 1+4 @100°C) im Bereich von 1 bis 120 ME und insbesondere bevorzugt im Bereich von 10 bis 90 ME. Dies entspricht ungefähr einem Gewichtsmittel des Molekulargewicht M_{w} im Bereich von ca. 12.000 bis 500.000 g/mol. Die ganz oder teilweise hydrierten Nitrilkautschuke besitzen ferner eine Polydispersität PDI= Mw/Mn, wobei Mw das Gewichtsmittel und Mn das Zahlenmittel des Molekulargewichts darstellt, im Bereich von und bevorzugt im Bereich von 1,0-6. Im Fall des Einsatzes von ganz oder teilweise hydrierte Nitrilkautschuken, die einer Metathese zum Abbau des Molekulargewichts unterzogen wurden, ist die Polydispersität üblicherweise kleiner gleich 3,0, bevorzugt kleiner gleich 2,5, besonders bevorzugt kleiner gleich 2,3, insbesondere bevorzugt kleiner gleich 2,2 und ganz besonders bevorzugt kleiner gleich 2,1.

Unter Hydrierung wird im Rahmen dieser Erfindung eine Umsetzung der im Ausgangs-Nitrilkautschuk vorhandenen Doppelbindungen zu mindestens 50 %, bevorzugt 70-100%, besonders bevorzugt 80-100%, verstanden. Besonders bevorzugt sind auch Restgehalte von Doppelbindungen im HNBR von 0 bis 8%. Als ganz oder auch vollständig hydriert wird ein Nitrilkautschuk in der Regel bereits dann bezeichnet, wenn der Restdoppelbindungsgehalt bei maximal 0,9% liegt.

### Kraftstoffe:

Bei der erfindungsgemäßen Verwendung werden die auf ganz oder teilweise hydrierten Nitrilkautschuken mit einem Gehalt von einpolymerisiertem α,β-ungesättigtem Nitril von größer 43 Gew.% basierenden Formteile mit flüssigen Kraftstoffen in Kontakt gebracht.

Bei diesen flüssigen Kraftstoffen handelt es sich Brennstoffe, die zum Betrieb von Verbrennungsmotoren dienen und bei denen es sich je nach Verwendungsart um Düsen-, Flug-, Diesel-, Otto-, Traktoren-, Renn-Kraft- oder -Treibstoffe handelt;

Bei den flüssigen Kraftstoffen handelt es sich bevorzugt um Motorkraftstoffe, besonders bevorzugt um Benzin, Kerosin oder Diesel.

Darüberhinaus ist die erfindungsgemäße Verwendung anwendbar auf Gemische aus flüssigen Kraftstoffen und aliphatischen Alkoholen, bevorzugt C₁-C₁₀, besonders bevorzugt C₁-C₈ Alkoholen, insbesondere Methanol oder Ethanol. Geeignet sind hierbei Gemische, in denen Benzin und der/die Alkohole, insbesondere Benzin und Methanol oder Ethanol, in jedem beliebigen Mischungsverhältnis stehen, insbesondere in einem Volumenverhältnis Benzin : Alkohol(en) von (5-100) : (95-0), bevorzugt (10-100) : (90-0) und besonders bevorzugt von (15-100) : (85-0). Alternativ ist die erfindungsgemäße Verwendung auch anwendbar auf Diesel, sogenannten Biodiesel oder auf Gemische aus Diesel und Biodiesel in jedem beliebigem Mischungsverhältnis.

Unter "Biodiesel" werden dabei alle als Biodiesel-Treibstoff einsetzbaren gesättigten und ungesättigten Fettsäurealkylester, insbesondere Fettsäuremethylester verstanden, wie sie üblicherweise unter dem Begriff Biodiesel für den Einsatz als Kraftstoff in Automobilen für Dieselmotoren und Kraftwagen, Blockheizkraftwerken, Schiffen und Booten sowie stationäre Dieselmotoren angeboten werden. Üblicherweise sind die als Biodiesel eingesetzten Fettsäuremethylester C₁₄-C-Fettsäuremethylester, die sowohl rein als auch im Gemisch vorliegen können. Die im erfindungsgemäßen Verfahren eingesetzten Biodiesel können darüber hinaus alle üblichen Zusatzstoffe, wie sie z.B. zur Erhöhung der Winterstabilität von Biodiesel zugesetzt werden, enthalten. Üblicherweise entstammen die durch das erfindungsgemäße Verfahren in ihrer Lagerstabilität verbesserten Biodiesel einem Umesterungsverfahren mit Methanol, und pflanzlichen Ölen, wie Rapsöl, Sojaöl, Palmöl oder Altspeiseölen und -fetten oder tierischen Fetten. Vorzugsweise wird Biodiesel erfindungsgemäß stabilisiert, welcher durch die genannte Umesterung aus Rapsöl oder Sojaöl gewonnen wurde.

### Weitere Komponenten der vulkanisierbaren Mischung:

Auf Basis der zuvor beschriebenen speziellen hoch-nitrilhaltigen HNBR Kautschuke werden vulkanisierbare Mischungen hergestellt, die mindestens einen Vernetzer und gegebenenfalls ein oder mehrere weitere Additive als Komponenten enthalten.

### Vernetzer:

Als Vernetzer können ein oder mehrere radikalische Vernetzer wie z.B. peroxidische Vernetzer eingesetzt werden. Als peroxidische Vernetzer kommen beispielsweise die folgenden in Frage:
- Bis(2,4-dichlorbenzyl)peroxid
- Dibenzoylperoxid
- Bis(4-chlorbenzoyl)peroxid
- 1,1 -Bis-(t-butylperoxy)-3,3,5-trimethylcylohexan
- tert-Butylperbenzoat
- 2,2-Bis(t-butylperoxy) buten und
- 4,4-di-tert.Butyl peroxynonylvalerat
- Dicumylperoxid
- 2,5-Dimethyl-2,5-di(t-butylperoxy)-hexan
- tert-Butylcumylperoxid
- 1,3-Bis(t-butylperoxy isopropyl)-benzol
- Di-t-butylperoxid und
- 2,5-Dimethyl-2,5-di(t-butylperoxy)-hexin-3.

Das oder die Peroxide werden, bezogen auf 100 Gewichtsteile des ganz oder teilweise hydrierten Nitrilkautschuks, vorzugsweise in einer Gesamtmenge von 0,2 bis 8 Gew.-Teilen eingesetzt, besonders bevorzugt in einer Gesamtmenge von 0, 2 bis 5 Gew.-Teilen und insbesondere in einer Gesamtmenge von 0, 2 bis 4 Gew.-Teilen.

Es kann vorteilhaft sein, neben den peroxidischen Vernetzern noch weitere **Aktivatoren** einzusetzen: Hierfür sind beispielsweise Triallylisocyanurat, Triallylcyanurat, Trimethylolpropantri(meth)acrylat, Triallyltrimellithat, Ethylenglycoldimethacrylat, Butandioldimethacrylat, Trimethylolpropantrimethacrylat, Zn-diacrylat, Zn-dimethacrylat, 1,2-Polybutadien oder N,N'-m-phenylendimaleinimid geeignet. Die Menge der Aktivatoren beträgt üblicherweise 0,1 bis 30 Gew.-Teile, bezogen auf 100 Gew.-Teile des ganz oder teilweise hydrierten Nitrilkautschuks.

Darüber hinaus können auch andere radikalische Vernetzer wie organische Azoverbindungen, bevorzugt Azo-bis-isobutyronitril oder Azo-bis-cyclohexannitril zur Anwendung gelangen.

Darüber hinaus können auch andere Vernetzer wie Di- oder Polymercaptoverbindungen, bevorzugt Dimercaptoethan, 1,6-Dimercaptohexan, 1,3,5-Trimercaptotriazin oder Mercapto-terminierte Polysulfidkautschuke, insbesondere Mercapto-terminierte Umsetzungsprodukte von Bis-Chlorethylformal mit Natriumpolysulfid zum Einsatz gelangen.

Anstelle (oder in Mischung mit) den vorgenannten Vernetzern kann auch ein Polyamin-Vernetzer eingesetzt werden. Diese Polyamin-Vernetzer sind besonders dann bevorzugt, wenn der eingesetzte ganz oder teilweise hydrierte Nitrilkautschuk über funktionale Gruppen, insbesondere Carboxylgruppen verfügt, oder aber über Gruppen, die unter Vernetzungsbedingungen in-situ zu Carboxylgruppen führen. Als Polyamin-Vernetzer wird im Sinne dieser Anmeldung eine Verbindung verstanden, die (1) entweder zwei oder mehr Aminogruppen aufweist oder (2) unter Vernetzungsbedingungen in-situ zur Bildung von zwei oder mehr Aminogruppen führt. Bei den Polyamin-Verbindungen kann es sich beispielsweise um Verbindungen handeln, bei denen zwei oder mehr Wasserstoffatome eines aliphatischen oder aromatischen Kohlenwasserstoffs durch Aminogruppen oder aber Hydrazidstrukturen (d.h. eine Struktur der Formel "-CONHNH₂", wobei CO für eine Carbonylgruppe steht) ersetzt wurden.

Als Beispiele für derartige Polyamin-Vernetzer sind geeignet:
- ein aliphatisches Polyamin, bevorzugt Hexamethylendiamin, hexamethylendiamincarbamat, Tetramethylenpentamin, Hexamethylenediaminzimtaldehyd-Addukt oder Hexamethylendiamindibenzoatsalz
- ein aromatisches Polyamin, bevorzugt 2,2-bis(4-(4-aminophenoxy)phenyl)propan, 4,4'-Methylendianilin, m-Phenylendiamin, p-Phenylendiamin, 4,4'-Methylen-bis (o-chloranilin)
- Verbindungen mit mindestens zwei Hydrazidstrukturen, bevorzugt Isophthalsäuredihydrazid, Adipinsäuredihydrazid oder Sebacinsäuredihydrazid.

Bevorzugt sind insbesondere aliphatische Polyamine und insbesondere Hexamethylendiamin.

Die Menge des Polyamin-Vernetzers in einer vulkanisierbaren Polymerzusammensetzung liegt üblicherweise in einem Bereich von 0,2 bis 20 Gew.Teile, bevorzugt im Bereich von 1 bis 15 Gew.Teile und insbesondere 1,5 bis 10 Gew.Teile bezogen auf 100 Gewichtsteile des ganz oder teilweise hydrierten Nitrilkautschuks.

Anstelle oder aber zusätzlich zu den vorgenannten Vernetzern können Schwefel oder andere übliche Schwefel-enthaltende Vernetzer oder Mischungen davon eingesetzt werden. Geeignete Schwefel-enthaltende Vernetzer sind kommerziell erhältlich, beispielsweise als Vulkacit® DM/C (Benzothiazyldisulfid), Vulkacit® Thiuram MS/C (Tetramethylthiurammonosulfid) und Vulkacit® Thiuram/C (Tetramethylthiuramdisulfid). Möglich ist beispielsweise der kombinierte Einsatz eines Peroxids wie Zinkperoxid und einem der vorgenannten Schwefel-basierten Vernetzer.

Optional können in der vulkanisierbaren Mischung **ein oder mehrere Kautschukadditive** enthalten sein, umfassend aber nicht eingeschränkt auf Füllstoffe, Füllstoffaktivatoren, Beschleuniger, Ozonschutzmittel, Antioxidationsmittel, Verarbeitungshilfsmittel, Extenderöle, Weichmacher, Verstärkungsmaterialien, Formtrennmittel sowie Anvulkanisationshemmer.

### Füllstoffe:

Als **Füllstoffe** können beispielsweise Ruß, Kieselsäure, Bariumsulfat, Titandioxid, Zinkoxid, Calciumoxid, Calciumcarbonat, Magnesiumoxid, Aluminiumoxid, Eisenoxid, Aluminiumhydroxid, Magnesiumhydroxid, Natriumcarbonat, Lithiumcarbonat, Aluminiumsilikate, Diatomeenerde, Talkum, Kaoline, Bentonite, Kohlenstoff Nanotubes, Teflon (letzteres bevorzugt in Pulverform) oder Silikate eingesetzt werden. Die Menge an Füllstoffen beträgt üblicherweise 1 bis 300 Gew.-Teile, bezogen auf 100 Gew.-Teile des ganz oder teilweise hydrierten Nitrilkautschuks.

### Füllstoffaktivatoren:

Als **Füllstoffaktivatoren** kommen insbesondere organische Silane, wie beispielsweise Vinyltrimethyloxysilan, Vinyldimethoxymethylsilan, Vinyltriethoxysilan, Vinyltris(2-methoxyethoxy)silan, N-Cyclohexyl-3-aminopropyltrimethoxysilan, 3-Aminopropyl-trimethoxysilan, Methyltrimethoxysilan, Methyltriethoxysilan, Dimethyldimethoxysilan, Dimethyldiethoxysilan, Trimethylethoxysilan, Isooctyltrimethoxysilan, Isooctyltriethoxy-silan, Hexadecyltrimethoxysilan oder (Octadecyl)methyldimethoxysilan in Betracht. Weitere Füllstoffaktivatoren stellen zum Beispiel grenzflächenaktive Substanzen wie Triethanolamin und Ethylenglycole mit Molekulargewichten von 74 bis 10 000 g/mol dar. Die Menge an Füllstoffaktivatoren beträgt üblicherweise 0,5 bis 10 Gew.-Teile, bezogen auf 100 Gew.-Teile des ganz oder teilweise hydrierten Nitrilkautschuks.

### Alterungsschutzmittel:

Als **Alterungsschutzmittel** kommen insbesondere solche in Frage, die bei der peroxidischen Vulkanisation möglichst wenig Radikale abfangen. Dies sind insbesondere oligomerisiertes 2,2,4-Trimethyl-1,2-dihydro-chinolin (TMQ), styrolisiertes Dipenylamin (DDA), octyliertes Diphenylamin (OCD) oder Zinksalz von 4- und 5-Methylmercaptobenzimidazol (ZMB2). Daneben können auch die bekannten phenolischen Alterungsschutzmittel eingesetzt werden, wie sterisch gehinderte Phenole bzw. Alterungsschutzmittel auf Basis von Phenylendiaminen. Es können auch Kombinationen der genannten Alterungsschutzmittel eingesetzt werden.

Die **Alterungsschutzmittel** werden üblicherweise in Mengen von 0,1 bis 5 Gew.-Teile, bevorzugt von 0,3 bis 3 Gew.-Teile, bezogen auf 100 Gew.-Teile des ganz oder teilweise hydrierten Nitrilkautschuks, eingesetzt.

### Formtrennmittel:

Als **Formtrennmittel** kommen beispielsweise in Betracht: Gesättigte und teilweise ungesättigte Fett- und Ölsäuren und deren Derivate (Fettsäureester, Fettsäuresalze, Fettalkohole, Fettsäureamide), die vorzugsweise als Mischungsbestandteil Verwendung finden, weiterhin auf die Formoberfläche applizierbare Produkte, wie beispielsweise Produkte auf Basis von niedermolekularen Silikonverbindungen, Produkte auf Basis von Fluorpolymeren sowie Produkte auf Basis von Phenolharzen.

Die **Formtrennmittel** werden als Mischungsbestandteil in Mengen von 0,2 bis 10 Gew.-Teile, bevorzugt 0,5 bis 5 Gew.-Teile, bezogen auf 100 Gew.-Teile des ganz oder teilweise hydrierten Nitrilkautschuks, eingesetzt.

### Festigkeitsträger:

Auch die Verstärkung der Vulkanisate durch Beimischung von Festigkeitsträgern (Fasern) aus Glas, nach der Lehre von US-A-4,826,721, zur vulkanisierbaren Mischung ist möglich sowie die Verstärkung durch Corde, Gewebe, Fasern aus aliphatischen und aromatischen Polyamiden (Nylon®, Aramid®), Polyestern und Naturfaserprodukten.

Eine beispielhafte Aufstellung von in der Kautschukindustrie üblichen Beimengungen findet man z.B. im SGF Rubber Handbook des schwedischen Instituts für Gummi Technologie, 10 Auflage.

Aus den zuvor genannten Bestandteilen wird zunächst eine vulkanisierbare Mischung auf Basis des ganz- oder teilweise hydrierten HNBR mit einem Gehalt des einpolymerisierten α,β-ungesättigtem Nitrils größer 43 Gew.% hergestellt. Die Mischung der zwei wesentlichen Bestandteile, d.h. des vorgenannten ganz oder teilweise hydrierten HNBR sowie mindestens eines Vernetzer, und der optionalen weiteren Bestandteile kann dabei je nach Temperatur unter Verwendung der typischen, in der Kautschukindustrie gängigen Mischapparaturen erfolgen. Einsetzbar sind sowohl diskontinuierlich mischende Aggregate in Form von Mischwalzen oder Innenmischern als auch kontinuierlich mischende Aggregate wie Mischextruder. Es hat sich bewährt darauf zu achten, dass die Mischung der Bestandteile bei einer Temperatur erfolgt, bei der keine vorzeitige Vernetzung ("Scorch") stattfindet.

Die Herstellung von vulkanisierten Erzeugnissen erfolgt, indem man die vulkanisierbaren Zusammensetzungen einer Temperaturbehandlung aussetzt.

Die Herstellung der vulkanisierten Erzeugnissen wird dabei so durchgeführt, dass man die vulkanisierbaren Zusammensetzungen in üblicher Weise in geeigneten Formwerkzeugen einer erhöhten Temperatur, bevorzugt im Bereich von 120 bis 200°C, besonders bevorzugt von 140 bis 180 °C aussetzt.

Bei den Erzeugnisse, die durch Vulkanisieren der erfindungsgemäßen Zusammensetzungen erhältlich sind, handelt es sich bevorzugt um Riemen, Dichtungen, Schläuche und Membranen.

Die prinzipielle Herstellung derartiger Riemen, Dichtungen, Schläuche und Membranen ist dem Fachmann bekannt. Für die Herstellung von Riemen kann der Fachmann unter Einsatz der erfindungsgemäßen vulkanisierbaren Zusammensetzungen beispielsweise analog zur Offenbarung der US-A-4,715,607 verfahren.

Die Permeation in flüssige Kraftstoffe wird gemäß **DIN-EN-ISO 6179/2001** (Verfahren B) bestimmt. Im Sinne dieser Erfindung ist unter Verringerung der Permeation insbesondere und bevorzugt die Verringerung der Permeation flüssiger Kraftstoffe in die entsprechenden Formteile um mindestens 30 %, bevorzugt mindestens 31 % bezogen auf die Permeation flüssiger Kraftstoffe in Formteile auf Basis eines vollständig hydrierten Acrylnitril-Butadien-Copolymers mit einem Acrylnitril-Gehalt von 43 Gew.% und einer Mooney-Viskosität [ML 1+4@100°C] von 70.

### Beispiele:

In den nachfolgenden Beispielen wurden die folgenden Kautschuke sowie weitere Komponenten verwendet:

### Therban^{®} A 4307

Hydriertes Acrylnitril-Butadien-Copolymer mit einem Restdoppelbindungsgehalt von max. 0,9 %, einem Acrylnitril-Gehalt von 43 Gew.%, und einer Mooney-Viskosität (ML 1+4 @ 100°C) von 70.

### Therban^{®} A 5008 VP

Hydriertes Acrylnitril-Butadien-Copolymer mit einem Restdoppelbindungsgehalt von max. 0,9 %, einem Acrylnitril-Gehalt von 49 Gew.%, und einer Mooney-Viskosität (ML 1+4 @ 100°C) von 80.

### Therban^{®} AT A 5005 VP

Hydriertes Acrylnitril-Butadien-Copolymer mit einem Restdoppelbindungsgehalt von max. 0,9 %, einem Acrylnitril-Gehalt von 49 Gew.%, und einer Mooney-Viskosität (ML 1+4 @ 100°C) von 55, Lanxess Deutschland GmbH

### MT THERMAX FLOFORM N-990

MT ("Medium Thermal")-Russ, Lehmann und Voss

### DISFLAMOLL DPK

Weichmachergemisch aus Phenyl- und Kresylphosphaten, Lanxess Deutschland GmbH

### Edenor^{®} C 18 98-100:

Stearinsäure (Tensid); Cognis GmbH

### Luvomaxx^{®} CDPA:

4, 4'-Bis-(1,1-dimethylbenzyl)-diphenylamin; Lehmann & Voss

### RHENOGRAN^{®} PCD-50

Polycarbodiimid, gebunden auf Ethylenvinylacetat (50 Gew.%), Rheinchemie Rheinau GmbH

### Dynamar^{®} RC-5251 Q:

Natriumcarbonat, 100%, 3M

### Maglite^{®} DE:

Magnesium oxid (Aktivator); CP Hall

### Zinkoxyd Aktiv^{®}:

Feinteiliges Zinkoxid (Aktivator); Lanxess Deutschland GmbH

### TAIC^{®}:

Triallylisocyanurat; Kettlitz Chemie GmbH & Co. KG

### Perkadox^{®} 14-40 B-pd:

Di(tert-butylperoxyisopropyl)benzol 40% auf Kreide und Silica Binder; Akzo Nobel Polymer Chemicals BV.

Alle Komponenten, die in der nachfolgenden Tabelle 1 angegeben sind, wurden - sofern nicht anders angegeben - in phr, d.h. parts per hundred parts of rubber eingesetzt.

**Tabelle 1:**

| | | **Vergleichsbeispiel** | **Beispiel 1** | **Beispiel 2** |
|---|---|---|---|---|
| **Zusammsetzung** | | **4307** | **5008** | **5005** |
| Therban^{®} A 4307 | | 100 | | |
| Therban^{®} A 5008 VP | | | 100 | |
| Therban^{®} AT A 5005 VP | | | | 100 |
| | | **phr** | **phr** | **phr** |
| MT THERMAX FLOFORM N-990 | | 100 | 100 | 100 |
| DISFLAMOLL DPK | | 10 | 10 | 10 |
| Edenor^{®} C 18 98-100 | | 1 | 1 | 1 |
| Luvomaxx CDPA | | 3 | 3 | 3 |
| RHENOGRAN PCD-50 | | 3 | 3 | 3 |
| Dynamar^{®} RC-5251 Q | | 8 | 8 | 8 |
| Maglite^{®} DE | | 2 | 2 | 2 |
| Zinkoxyd Aktiv^{®} | | 2 | 2 | 2 |
| TAIC^{®} | | 1,5 | 1,5 | 1,5 |
| Perkadox^{®} 14-40 B-pd | | 8 | 8 | 9,5 |

Aus den in Tabelle 1 genannten Komponenten wurde durch Mischen in einem Banbury Mischer über einen Zeitraum von 4 min bei bis zu 120°C eine vulkanisierbare Mischung hergestellt. Diese wurde anschließend bei 180°C für einen Zeitraum von 20 Minuten vulkanisiert.

Bei den für die nachfolgenden Untersuchungen eingesetzten Prüfkörpern handelte es sich um S2-Stäbchen nach ASTM D 412-80.

An diese Prüfkörpern wurden die folgenden Untersuchungen gemäß den ebenfalls genannten Vorschriften bestimmt:

Die **Härte** nach Shore A wurde gemäß ASTM-D2240-81 gemessen.

Die **Bruchdehnung ("Elongation at Break"), Zugfestigkeit ("Tensile Strenght")** sowie M**25** und **M100 Werte** wurden gemäß ASTM D 412-80 bestimmt.

Der **Druckverformungsrest** (auch abgekürzt als "CS" für"Compression Set") wurde gemäß ASTM D 395 bestimmt.

Die Ergebnisse sind in **Tabelle 2** dargestellt.

**Tabelle 2:**

| | **Temp.: 23°C** | **Vergleichsbeispiel** | **Beispiel 1** | **Beispiel 2** |
|---|---|---|---|---|
| **Eingeschaften** | | **4307** | **5008** | **5005** |
| Hardness | Shore A | 68 | 73 | 73 |
| M25 | MPa | 1,1 | 1,5 | 1,4 |
| M100 | MPa | 3,3 | 4,2 | 4,3 |
| Bruchdehnung ("Elongation at Break") | % | 383 | 381 | 318 |
| Zugfestigkeit ("Tensile Strength") | MPa | 15,7 | 15,3 | 15,7 |
| CS 22h/150°C | % | 32 | 40 | 36 |
| CS 70h/135°C | % | 43 | 48 | 42 |

Die Alterungseigenschaften der Vulkanisate wurden anschließend nach einer Lagerungszeit von 72 bzw. 168 Stunden bei 150°C in einem Trockenschrank untersucht. Die Ergebnisse sind in **Tabelle 3** dargestellt.

**Tabelle 3: Alterungseigenschaften**

| | | **Vergleichsbeispiel** | **Beispiel 1** | **Beispiel 2** |
|---|---|---|---|---|
| **Alterung über 72h/150°C** | | **4307** | **5008** | **5005** |
| Härte | Shore A | 81 | 86 | 86 |
| S25 | MPa | 2,4 | 3 | 3,2 |
| S100 | MPa | 6,7 | 8,2 | 8,6 |
| D Median | % | 360 | 299 | 276 |
| F Median | MPa | 14,3 | 16,3 | 16 |
| | | | | |

| **Eigenschaftsänderungen der für 72 h bei 150°C gelagerten Proben gegenüber den ungealterten Proben aus Tabelle 2** | | | | |
|---|---|---|---|---|
| Härte | Shore A | 13 | 13 | 13 |
| M25 | % | 118,2 | 100 | 128,6 |
| M100 | % | 103 | 95,2 | 100 |
| Bruchdehnung ("Elongation at Break") | % | -6 | -22 | -13 |
| Zugfestigkeit ("Tensile Strength") | % | -8,9 | 6,5 | 1,9 |
| | | | | |

| **Alterung über 168h/150°C** | | | | |
|---|---|---|---|---|
| Härte | Shore A | 83 | 88 | 88 |
| M25 | MPa | 2,6 | 3,5 | 3,7 |
| M100 | MPa | 6,6 | 9,4 | 9,3 |
| Bruchdehnung ("Elongation at Break") | % | 338 | 297 | 265 |
| Zugfestigkeit ("Tensile Strength") | MPa | 12,4 | 14,6 | 14,4 |
| | | | | |

| **Eigenschaftsänderungen der für 168 h bei 150°C gelagerten Proben gegenüber de ungealterten Proben aus Tabelle 2** | | | | |
|---|---|---|---|---|
| Härte | Shore A | 16 | 15 | 15 |
| M25 | % | -82,9 | 133,3 | 164,3 |
| M100 | % | -58 | 123,8 | 116,3 |
| Bruchdehnung ("Elongation at Break") | % | -12 | -22 | -17 |
| Zugfestigkeit ("Tensile Strength") | % | -21 | -4,6 | -8,3 |

### Eigenschaften bei Kontakt mit Kraftstoffen:

Nachfolgend wurde die Eigenschaften der drei Vulkanisate bei Kraftstoff-Kontakt untersucht. Hierbei wurde entweder 100% Kraftstoff oder aber Abmischungen aus Krafstoff mit Ethanol ("E") im angegebenen Volumenverhältnis eingesetzt.

Als **Kraftstoff** wurde Fuel C nach DIN EN ISO 6179 eingesetzt.

Als **Ethanol** wurde Ethanol, unvergällt 96 Vol.% eingesetzt. Die nachfolgend als "E xx" abgekürzten Abmischungen waren Fuel C /Ethanolgemische mit xx Vol.% Anteilen an Ethanol.

In **Tabelle 4** sind die Ergebnisse nach einem Kraftstoffkontakt mit 100% Kraftstoff bei 40 °C und einer Lagerung über 72 bzw. 168 h dargestellt sowie die jeweiligen prozentualen Änderungen gegenüber der Probe vor Kraftstoffkontakt.

**Tabelle 4: Eigenschaften bei Kontakt mit 100% Kraftstoff bei 40°C**

| | | **Vergleichsbeispiel 1** | **Beispiel 1** | **Beispiel 2** |
|---|---|---|---|---|
| **Lagerung bei 40°C** | | **4307** | **5008** | **5005** |
| | | | | |

| **Fuel C** | **72h/40°C** | | | |
|---|---|---|---|---|
| Härte | Shore A | 44 | 48 | 51 |
| M25 | MPa | 0,5 | 0,5 | 0,5 |
| M100 | MPa | 2,5 | 2,1 | 2,4 |
| Bruchdehnung ("Elongation at Break") | % | 284 | 343 | 273 |
| Zugfestigkeit ("Tensile Strength") | MPa | 10,2 | 10,2 | 10,2 |
| | | | | |

| **Eingenschaftsänderungen der für 72 h bei 40°C gelagerten Proben gegenüber den Proben aus Tabelle 2** | | | | |
|---|---|---|---|---|
| Härte | Shore A | -23 | -24 | -22 |
| M25 | % | -58,3 | -66,7 | -64,3 |
| M100 | % | -28,6 | -50 | -44,2 |
| Bruchdehnung ("Elongation at Break") | % | -26 | -10 | -14 |
| Zugfestigkeit ("Tensile Strength") | % | -35,4 | -33,3 | -35 |
| Massenänderung | % | 19 | 13,13 | 12,82 |
| Volumenänderung | % | 31,7 | 23,01 | 22,64 |
| | | | | |

| **Fuel C** | **168h/40°C** | | | |
|---|---|---|---|---|
| Härte | Shore A | 45 | 47 | 51 |
| M25 | MPa | 0,5 | 0,5 | 0,6 |
| M100 | MPa | 2,5 | 2 | 2,4 |
| Bruchdehnung ("Elongation at Break") | % | 261 | 331 | 268 |
| Zugfestigkeit ("Tensile Strength") | MPa | 10 | 10,4 | 10,2 |
| | | | | |

| **Eigenschaftsänderungen der für 168 h bei 40°C gelagerten Proben gegenüber den Proben aus Tabelle 2** | | | | |
|---|---|---|---|---|
| Härte | Shore A | -22 | -26 | -22 |
| M25 | % | -58,3 | -66,7 | -57,1 |
| M100 | % | -28,6 | -52,4 | -44,2 |
| Bruchdehnung ("Elongation at Break") | % | -32 | -13 | -16 |
| Zugfestigkeit ("Tensile Strength") | % | -36,7 | -32 | -35 |
| Massenänderung | % | 19,1 | 12,1 | 11,9 |
| Volumenänderung | % | 32,2 | 21,2 | 20,9 |

In **Tabelle 5** sind die Ergebnisse nach einem Kontakt mit einer Mischung aus 80% Kraftstoff und 20 % Ethanol bei 40 °C und einer Lagerung über 72 bzw. 168 h dargestellt sowie die jeweiligen prozentualen Änderungen gegenüber der Probe vor dem Kontakt mit der Mischung.

**Tabelle 5: Eigenschaften bei Kontakt mit einer Mischung aus 80% Kraftstoff und 20% Ethanol bei 40°C**

| | | **Vergleichsbeispiel 1** | **Beispiel 1** | **Beispiel 2** |
|---|---|---|---|---|
| **Lagerung bei 40°C** | | **4307** | **5008** | **5005** |
| | | | | |
| **Ethanol/Fuel C=(20/80)** | **72h/40°C** | | | |
| Härte | Shore A | 41 | 43 | 42 |
| M25 | MPa | 0,5 | 0,5 | 0,4 |
| M100 | MPa | 2,7 | 2,5 | 2,6 |
| Bruchdehnung ("Elongation at Break") | % | 223 | 189 | 207 |
| Zugfestigkeit ("Tensile Strength") | MPa | 8,2 | 7,5 | 7,4 |
| | | | | |

| **Eigenschaftsänderungen der für 72 h bei 40°C in Ethanol/Fuel C= (20/80) gelagerten Proben gegenüber den Proben aus Tabelle 2** | | | | |
|---|---|---|---|---|
| Härte | Shore A | -26 | -30 | -31 |
| M25 | % | -58,3 | -66,7 | -71,4 |
| M100 | % | -22,9 | -40,5 | -39,5 |
| Bruchdehnung ("Elongation at Break") | % | -42 | -50 | -35 |
| Zugfestigkeit ("Tensile Strength") | % | -48,1 | -51 | -52,9 |
| Massenänderung | % | 29 | 25,5 | 24,44 |
| Volumenänderung | % | 49,06 | 42,72 | 42,11 |
| | | | | |

| **Ethanol/Fuel C = (20/80)** | **168h/40°C** | | | |
|---|---|---|---|---|
| Härte | Shore A | 39 | 41 | 41 |
| M25 | MPa | 0,5 | 0,4 | 0,4 |
| S100 | MPa | 2,9 | 2 | 2,5 |
| Bruchdehnung ("Elongation at Break") | % | 209 | 257 | 204 |
| Zugfestigkeit ("Tensile Strength") | MPa | 7,9 | 7,8 | 7,3 |
| | | | | |

| **Eigenschaftsänderungen der für 168 h bei 40°C in Ethanol/Fuel C = (20/80) gelagerten Proben gegenüber den Proben aus Tabelle 2** | | | | |
|---|---|---|---|---|
| Härte | Shore A | -28 | -32 | -32 |
| M25 | % | -58,3 | -73,3 | -71,4 |
| M100 | % | -17,1 | -52,4 | -41,9 |
| Bruchdehnung ("Elongation at Break") | % | -46 | -33 | -36 |
| Zugfestigkeit ("Tensile Strength") | % | -50 | -49 | -53,5 |
| Massenänderung | % | 31,7 | 24,4 | 24,0 |
| Volumenänderung | % | 53,7 | 41,8 | 41,1 |

In **Tabelle 6** sind die Ergebnisse nach einem Kontakt mit einer Mischung aus 40% Kraftstoff und 60 % Ethanol bei 40 °C und einer Lagerung über 72 bzw. 168 h dargestellt sowie die jeweiligen prozentualen Änderungen gegenüber der Probe vor dem Kontakt mit der Mischung.

**Tabelle 6: Eigenschaften bei Kontakt mit einer Mischung aus 40% Kraftstoff und 60% Ethanol bei 40°C**

| | | **Vergleichsbeispiel 1** | **Beispiele 1** | **Beispiel 2** |
|---|---|---|---|---|
| **Lagerung bei 40°C** | | **4307** | **5008** | **5005** |
| | | | | |

| **Ethanol/Fuel C = (60/40)** | **72h/40°C** | | | |
|---|---|---|---|---|
| Härte | Shore A | 43 | 44 | 45 |
| M25 | MPa | 0,5 | 0,4 | 0,4 |
| M100 | MPa | 2,5 | 2,2 | 2,2 |
| Bruchdehnung ("Elongation at Break") | % | 238 | 206 | 240 |
| Zugfestigkeit ("Tensile Strength") | MPa | 8,6 | 8,1 | 8,4 |
| | | | | |

| **Eigenschaftsänderungen der für 72 h bei 40°C in Ethanol/Fuel C = (60/40) gelagerten Probe gegenüber den Proben aus Tabelle 2** | | | | |
|---|---|---|---|---|
| Härte | Shore A | -25 | -28 | -28 |
| M25 | % | -58,3 | -73,3 | -71,4 |
| M100 | % | -28,6 | -47,6 | -48,8 |
| Bruchdehnung ("Elongation at Break") | % | -38 | -46 | -25 |
| Zugfestigkeit ("Tensile Strength") | % | -45,6 | -47,1 | -46,5 |
| Massenänderung | % | 21 | 19,11 | 18,2 |
| Volumenänderung | % | 36,85 | 33,08 | 32,3 |
| | | | | |

| **Ethanol/Fuel C = (60/40)** | **168h/40°C** | | | |
|---|---|---|---|---|
| Härte | Shore A | 42 | 40 | 45 |
| M25 | MPa | 0,5 | 0,4 | 0,4 |
| M100 | MPa | 2,6 | 1,8 | 2,3 |
| Bruchdehnung ("Elongation at Break") | % | 262 | 285 | 244 |
| Zugfestigkeit ("Tensile Strength") | MPa | 9,4 | 8,6 | 8,6 |
| | | | | |

| **Eigenschaftsänderungen der für 168 h bei 40°C in Ethanol/Fuel C = (60/40) gelagerten Probe gegenüber den Proben aus Tabelle 2** | | | | |
|---|---|---|---|---|
| Härte | Shore A | -25 | -33 | -28 |
| M25 | % | -58,3 | -73,3 | -71,4 |
| M100 | % | -25,7 | -57,1 | -46,5 |
| Bruchdehnung ("Elongation at Break") | % | -32 | -25 | -23 |
| Zugfestigkeit ("Tensile Strength") | % | -40,5 | -43,8 | -45,2 |
| Massenänderung | % | 19,7 | 18,1 | 18,1 |
| Volumenänderung | % | 34,9 | 32,1 | 31,9 |

In **Tabelle 7** sind die Ergebnisse nach einem Kontakt mit einer Mischung aus 15% Kraftstoff und 85 % Ethanol bei 40 °C und einer Lagerung über 72 bzw. 168 h dargestellt sowie die jeweiligen prozentualen Änderungen gegenüber der Probe vor dem Kontakt mit der Mischung.

**Tabelle 7: Eigenschaften bei Kontakt mit einer Mischung aus 15% Kraftstoff und 85% Ethanol bei 40°C**

| | | **Vergleichsbeispiel 1** | **Beispiel 1** | **Beispiel 2** |
|---|---|---|---|---|
| **Rezept** | | **4307** | **5008** | **5005** |
| | | | | |

| **Ethanol/Fuel C = (85/15)** | **72h/40°C** | | | |
|---|---|---|---|---|
| Härte | Shore A | 50 | 52 | 54 |
| M25 | MPa | 0,6 | 0,6 | 0,6 |
| M100 | MPa | 2,6 | 2,3 | 2,5 |
| Bruchdehnung ("Elongation at Break") | % | 300 | 280 | 300 |
| Zugfestigkeit ("Tensile Strength") | MPa | 11,2 | 13,3 | 12,2 |
| | | | | |

| **Eigenschaftsänderungen der für 72 h bei 40°C in Ethanol/Fuel C = (85/15) gelagerten Probe gegenüber den Proben aus Tabelle** | | | | |
|---|---|---|---|---|
| Härte | Shore A | -17 | -21 | -19 |
| M25 | % | -50 | -60 | -57,1 |
| M100 | % | -25,7 | -45,2 | -41,9 |
| Bruchdehnung ("Elongation at Break") | % | -22 | -27 | -6 |
| Zugfestigkeit ("Tensile Strength") | % | -29,1 | -13,1 | -22,3 |
| Massenänderung | % | 8 | 6,24 | 5,97 |
| Volumenänderung | % | 16,67 | 13,62 | 13,34 |
| | | | | |

| **Ethanol/Fuel C = (85/15)** | **168h/40°C** | | | |
|---|---|---|---|---|
| Härte | Shore A | 51 | 53 | 55 |
| M25 | MPa | 0,6 | 0,6 | 0,6 |
| M100 | MPa | 2,7 | 2,2 | 2,6 |
| Bruchdehnung ("Elongation at Break") | % | 337 | 368 | 302 |
| Zugfestigkeit ("Tensile Strength") | MPa | 12,9 | 12,6 | 12,7 |
| | | | | |

| **Eigenschaftsänderungen der für 168 h bei 40°C in Ethanol/Fuel C = (85/15) gelagerten Proben gegenüber den Proben aus Tabelle** | | | | |
|---|---|---|---|---|
| Härte | Shore A | -16 | -20 | -18 |
| M25 | % | -50 | -60 | -57,1 |
| M100 | % | -22,9 | -47,6 | -39,5 |
| Bruchdehnung ("Elongation at Break") | % | -13 | -3 | -5 |
| Zugfestigkeit ("Tensile Strength") | % | -18,4 | -17,6 | -19,1 |
| Massenänderung | % | 6,8 | 4,9 | 4,9 |
| % Volumenänderung | | 14,9 | 11,2 | 11,1 |

### Permeation und Quellung:

Die Untersuchung der Permeation erfolgte an Prüfkörpern in Form von 2 mm dicken Vulkanisatplatten bei Lagerung in 100% Kraftstoff bzw. verschiedenen Abmischungen von Kraftstoff und Ethanol nach dem in **DIN-EN-ISO 6179/2001** (Verfahren B) beschriebenen Versuchsschema.. Die Untersuchung der Quellung erfolgte gemäß **DIN ISO 1817/2008.**

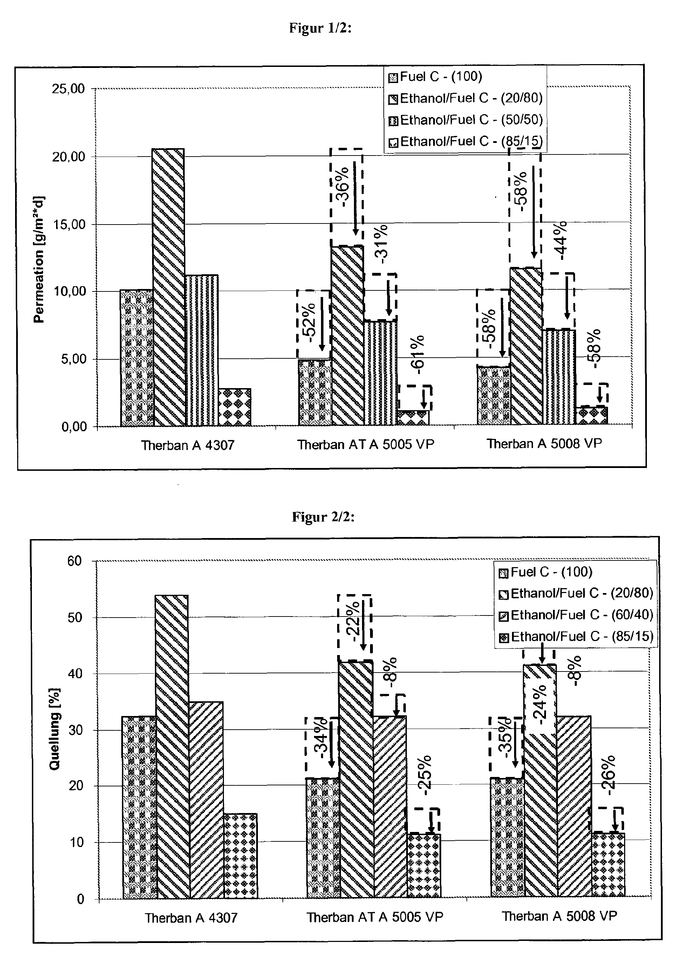

Die Ergebnisse dieser Untersuchungen sind in der nachfolgenden **Tabelle 8** dargestellt. **Tabelle 9** enthält ferner die prozentualen Änderungen der Werte für die Permeation bzw. Quellung zwischen dem Vergleichsbeispiel sowie Beispiel 1 bzw. 2. Diese Ergebnisse sind in den Figuren 1 und 2 nochmals graphisch dargestellt. Aus Tabelle 9 sowie den Figuren 1 und 2 zeigt sich deutlich, dass die Permeation von Kraftstoffen in die entsprechenden Prüfkörper bei Verwendung von HNBR basierten Vulkanisaten mit einem Acrylnitril-Gehalt von 50 Gew.% gegenüber einem Prüfkörper basierend auf einem HNBR mit einem Acrylnitril-Gehalt von 43 Gew.% prozentual deutlich stärker verringert wird, als dies bei der Quellung der Fall ist. Dies war für einen Fachmann völlig unvorhersehbar.

**Tabelle 8:**

| | **Vergleichsbeispiel 1** | **Beispiel 1** | **Beispiel 2** |
|---|---|---|---|
| | **4307** | **5008** | **5005** |
| **Permeation [g/(m2*d)], RT** | | | |
| Fuel C - (100) | 10,10 | 4,88 | 4,25 |
| Ethanol/Fuel C - (20/80) | 20,50 | 13,22 | 11,57 |
| Ethanol/Fuel C - (50/50) | 11,17 | 7,68 | 6,97 |
| Ethanol/Fuel C - (60/40) | - | - | - |
| Ethanol/Fuel C - (85/15) | 2,75 | 1,08 | 1,21 |
| | | | |

| **Quellung [%], 168h/40°C** | | | |
|---|---|---|---|
| Fuel C - (100) | 32 | 21 | 21 |
| Ethanol/Fuel C - (20/80) | 53,73 | 42 | 41,09 |
| Ethanol/Fuel C - (50/50) | - | - | - |
| Ethanol/Fuel C - (60/40) | 35 | 32,13 | 32 |
| Ethanol/Fuel C - (85/15) | 14,9 | 11,2 | 11,1 |

**Tabelle 9:**

| | **Änderung Vergleichsbeispiel zu Beispiel 1 in %** | **Änderung Vergleichsbeispiel zu Beispiel 2 in %** |
|---|---|---|
| **Permeation [g/(m2*d)], RT** | | |
| Fuel C - (100) | -52 | -58 |
| Ethanol/Fuel C - (20/80) | -36 | -44 |
| Ethanol/Fuel C - (50/50) | -31 | -38 |
| Ethanol/Fuel C - (60/40) | - | - |
| Ethanol/Fuel C - (85/15) | -61 | -56 |
| | | |

| **Quellung [%], 168h/40°C** | | |
|---|---|---|
| Fuel C - (100) | -34 | -35 |
| Ethanol/Fuel C - (20/80) | -22 | -24 |
| Ethanol/Fuel C - (50/50) | - | - |
| Ethanol/Fuel C - (60/40) | -8 | -8 |
| Ethanol/Fuel C - (85/15) | -25 | -26 |

## Patentansprüche

1. Verwendung von ganz oder teilweise hydrierten Nitrilkautschuken zur Verringerung der Permeation von flüssigen Kraftstoffen in Formteile, **dadurch gekennzeichnet, dass** der Gehalt des einpolymerisierten α,β-ungesättigten Nitrils größer als 43 Gew.%, bevorzugt größer als 44,5 Gew.% ist.

2. Verwendung nach Anspruch 1, wobei der ganz oder teilweise hydrierte Nitrilkautschuk ein Co- oder Terpolymer darstellt, welches auf Wiederholungseinheiten mindestens eines konjugierten Diens, mindestens eines α,β-ungesättigten Nitrils und gegebenenfalls einer oder mehrerer weiterer copolymerisierbarer Monomere basieren, wobei die C=C Doppelbindungen, die aus den Wiederholungseinheiten des konjugierten Diens sowie gegebenfalls der weiteren copolymerisierbaren Monomere stammen, ganz oder teilweise hydriert sind.

3. Verwendung nach Anspruch 1 oder 2, wobei der ganz oder teilweise hydrierte Nitrilkautschuk ein Co- oder Terpolymer darstellt, welches auf Wiederholungseinheiten mindestens eines (C₄-C₆) konjugierten Diens, bevorzugt 1,3-Butadien, Isopren, 2,3-Dimethylbutadien, Piperylen oder Gemischen daraus, Wiederholungseinheiten mindestens eines α,β-ungesättigten Nitril, bevorzugt mindestens eines (C₃-C₅)-α,β-ungesättigten Nitrils, besonders bevorzugt Acrylnitril, Methacrylnitril, Ethacrylnitril oder Mischungen davon beruht.

4. Verwendung nach einem oder mehreren der Ansprüche 1 bis 3, wobei der Gehalt des oder der einpolymerisierten α,β-ungesättigten Nitrile größer als 44,5 Gew.% und bis 60 Gew.%, bevorzugt größer als 44,5 Gew.% und bis 52 Gew.%, besonders bevorzugt 45 Gew.% bis 51,5 Gew.% und insbesondere 45 Gew.% bis 50,5 Gew.%, bezogen auf das Gesamtpolymer beträgt und der Gehalt des auf das konjugierte Dien oder die Summe der konjugierten Diene zurückgehenden Wiederholungseinheiten im Bereich von 40 Gew.% bis zu 55,5 Gew.%, bevorzugt 48 Gew.% bis zu 55,5 Gew.%, besonders bevorzugt 48,5 Gew.% bis zu 55 Gew.% und insbesondere 49,5 Gew.% bis zu 55 Gew.%, bezogen auf das Gesamtpolymer beträgt.

5. Verwendung nach einem oder mehreren der Ansprüche 1 bis 4, wobei es sich bei den flüssigen Kraftstoffen um Motorkraftstoffe, bevorzugt um Benzin, Kerosin oder Diesel handelt

6. Verwendung nach einem oder mehreren der Ansprüche 1 bis 4, wobei es sich um Gemische aus flüssigen Kraftstoffen und aliphatischen Alkoholen, bevorzugt C₁-C₁₀, besonders bevorzugt C₁-C₈ Alkoholen, insbesondere Methanol oder Ethanol handelt oder um Diesel, sogenannten Biodiesel oder auf Gemische aus Diesel und Biodiesel.

7. Verwendung nach einem oder mehreren der Ansprüche 1 bis 6, wobei es sich bei den Formteil um Riemen, Dichtungen, Schläuche oder Membranen handelt.

## Claims

1. Use of wholly or partly hydrogenated nitrile rubbers for reducing the permeation of liquid fuels into shaped parts, **characterized in that** the amount of the copolymerized α,β-unsaturated nitrile is greater than 43% by weight, preferably greater than 44.5% by weight.

2. Use according to Claim 1, where the wholly or partly hydrogenated nitrile rubber is a copolymer or terpolymer based on repeating units of at least one conjugated diene, at least one α,β-unsaturated nitrile and optionally one or more further copolymerizable monomers, where the C=C double bonds originating from the repeating units of the conjugated diene and also, where appropriate, of the further copolymerizable monomers are wholly or partly hydrogenated.

3. Use according to Claim 1 or 2, where the wholly or partly hydrogenated nitrile rubber is a copolymer or terpolymer based on repeating units of at least one C₄-C₆ conjugated diene, preferably 1,3-butadiene, isoprene, 2,3-dimethylbutadiene, piperylene or mixtures thereof, repeating units of at least one α,β-unsaturated nitrile, preferably at least one C₃-C₅ α,β-unsaturated nitrile, more preferably acrylonitrile, methacrylonitrile, ethacrylonitrile or mixtures thereof.

4. Use according to one or more of Claims 1 to 3, where the amount of the copolymerized α,β-unsaturated nitrile or nitriles is greater than 44.5% and up to 60% by weight, preferably greater than 44.5% and up to 52% by weight, more preferably 45% to 51.5% by weight and more particularly 45% to 50.5% by weight, based on the total polymer, and the amount of repeating units originating from the conjugated diene or from the sum total of the conjugated dienes is in the range from 40% up to 55.5% by weight, preferably 48% up to 55.5% by weight, more preferably 48.5% up to 55% by weight and more particularly 49.5% up to 55% by weight, based on the total polymer.

5. Use according to one or more of Claims 1 to 4, where the liquid fuels are motor fuels, preferably petrol, kerosene or diesel.

6. Use according to one or more of Claims 1 to 4, in relation to mixtures of liquid fuels and aliphatic alcohols, preferably C₁-C₁₀, more preferably C₁-C₈ alcohols, more particularly methanol or ethanol, or to diesel, biodiesel or mixtures of diesel and biodiesel.

7. Use according to one or more of Claims 1 to 6, where the shaped parts are belts, seals, hoses or membranes.

## Revendications

1. Utilisation de caoutchoucs nitrile partiellement ou totalement hydrogénés pour réduire la perméation de carburants liquides dans des pièces moulées, **caractérisée en ce que** la concentration du nitrile α,β-insaturé, incorporé par polymérisation, est supérieure à 43 % en poids, de préférence supérieure à 44,5 % en poids.

2. Utilisation selon la revendication 1, dans laquelle le caoutchouc nitrile partiellement ou totalement hydrogéné représente un copolymère ou terpolymère qui est à base de motifs répétitifs d'au moins un diène conjugué, d'au moins un nitrile α,β-insaturé et éventuellement d'un ou plusieurs autres monomères copolymérisables, les doubles liaisons C=C qui dérivent des motifs répétitifs du diène conjugué ainsi qu'éventuellement des autres monomères copolymérisables étant partiellement ou totalement hydrogénées.

3. Utilisation selon la revendication 1 ou 2, dans laquelle le caoutchouc nitrile partiellement ou totalement hydrogéné représente un copolymère ou terpolymère qui est à base de motifs répétitifs d'au moins un diène conjugué en C₄-C₆, de préférence le 1,3-butadiène, l'isoprène, le 2,3-diméthylbutadiène, le pipérylène ou des mélanges de ceux-ci, de motifs répétitifs d'au moins un nitrile α,β-insaturé, de préférence d'au moins nitrile α,β-insaturé en C₃-C₅, de façon particulièrement préférée l'acrylonitrile, le méthacrylonitrile, l'éthacrylonitrile ou des mélanges de ceux-ci.

4. Utilisation selon une ou plusieurs des revendications 1 à 3, dans laquelle la concentration du ou des nitriles α,β-insaturés, incorporés par polymérisation, est supérieure à 44,5 % en poids et vaut jusqu'à 60 % en poids, de préférence est supérieure à 44,5 % en poids et vaut jusqu'à 52 % en poids, de façon particulièrement préférée vaut de 45 % en poids à 51,5 % en poids et en particulier de 45 % en poids à 50,5 % en poids, par rapport au polymère total et la concentration de motifs répétitifs attribués au diène conjugué ou à la somme des diènes conjugués se situe dans la plage de 40 % en poids à 55,5 % en poids, de préférence de 48 % en poids à 55,5 % en poids, de façon particulièrement préférée de 48,5 % en poids à 55 % en poids et en particulier de 49,5 % en poids à 55 % en poids, par rapport au polymère total.

5. Utilisation selon une ou plusieurs des revendications 1 à 4, dans laquelle les carburants liquides consistent en des carburants pour moteurs, de préférence en essence, kérosène ou gazole.

6. Utilisation selon une ou plusieurs des revendications 1 à 4, dans laquelle il s'agit de mélanges de carburants liquides et d'alcools aliphatiques, de préférence d'alcools en C₁-C₁₀, de façon particulièrement préférée d'alcools en C₁-C₈, en particulier de méthanol ou d'éthanol ou de gazole, du dénommé biogazole ou de mélanges de gazole et biogazole.

7. Utilisation selon une ou plusieurs des revendications 1 à 6, dans laquelle pour ce qui concerne la pièce moulée il s'agit de courroies, de garnitures d'étanchéité, de tuyaux souples ou de membranes.
